# EUROPÄISCHE PATENTSCHRIFT

(11) **EP 2 580 169 B1**
(45) Veröffentlichungstag und Bekanntmachung des Hinweises auf die Patenterteilung: **09.07.2014**
(21) Anmeldenummer: 11727914.1
(22) Anmeldetag: 31.05.2011
(51) Int. Cl.: C03B 3/02

(54) **VERFAHREN UND VORRICHTUNG ZUM BESCHICKEN VON VORWÄRMERN FÜR GLAS-SCHMELZANLAGEN**
METHOD AND APPARATUS FOR FEEDING PREHEATERS FOR GLASS MELTING INSTALLATIONS
PROCÉDÉ ET DISPOSITIF PERMETTANT D'ALIMENTER DES DISPOSITIFS DE PRÉCHAUFFAGE DESTINÉS À DES INSTALLATIONS DE FUSION DU VERRE

(30) Priorität: 08.06.2010 DE 102010023018
(43) Veröffentlichungstag der Anmeldung: 17.04.2013
(73) Patentinhaber: Beteiligungen Sorg GmbH & Co. KG, 97816 Lohr am Main (DE)
(72) Erfinder: ROSENTHAL, Jens, 41812 Erkelenz (DE)
(74) Vertreter: Keil & Schaafhausen Patent- und Rechtsanwälte
(86) Internationale Anmeldenummer: PCT/EP2011/002678
(87) Internationale Veröffentlichungsnummer: WO 2011/154106

(56) Entgegenhaltungen:
- DE-C1- 3 217 414
- JP-A- 2001 355 009
- US-A- 2 658 743
- US-A- 4 323 384

## Beschreibung

Die Erfindung betrifft ein Verfahren zum Beschicken von Vorwärmern mit Heizelementen für das Beschickungsgut von Glas-Schmelzanlagen, wobei das Beschickungsgut durch Sensoren gesteuert in gleichförmiger Verteilung auf die obersten Heizelemente aufgebracht wird,

Berichte über die Vorbereitung von Beschickungsgut für Glasschmelzöfen werden schon seit Jahrzehnten veröffentlicht, in vielen Fällen mit Hinweisen auf die Verklebungsneigung von Gemengen mit unterschiedlichen Komponenten. Die Gemenge werden durch sehr unterschiedliche Verwendungszwecke der Glasschmelzen vorgegeben. Die Ursachen für die Verklebungsneigung der Komponenten sind sehr vielfältig und beruhen auf sehr unterschiedlichen Schmelzpunkten, Viskositäten, Partikelgrössen und -formen sowie auf thermischen und mechanischen Einflüssen auf dem Transportweg vor dem Aufschmelzen. Besonders störend ist hierbei mit dem Beschickungsgut eingeschlepptes freies oder gebundenes Wasser sowie Wasserdampf, der mit den Abgasen aus der nachgeschalteten Schmelzwanne zur Beheizung und Wärmerückgewinnung eingeführt wird. Die Kondensation verdampften Wassers fördert die Verklebungsneigung enorm. Ein weiterer störender Effekt ist ein Turm von Beschickungsgut, der sich über den obersten Heizleitungen unkontrolliert und ungleichmässig aufschichtet und in dem wiederum Wasserdampf kondensiert.

Durch die US 7 494 948 B2 ist es bekannt, frei fliessende Beschickungsmengen aus Glaskomponenten für Glasschmelzöfen jeweils in feuchtem Zustand (moist) entweder bei Temperaturen unter 35°C zu lagern oder auf Temperaturen von 100°C oder darüber vorzuwärmen, bevor sie einem Glasschmelzofen zugeführt werden. Das feuchte Beschickungsgut soll dabei einen freien Wasseranteil von 2 % bis 10 % und von 0,0001 % bis 5 % eines grenzflächenaktiven Stoffes enthalten, vorzugsweise eine wasserlösliche Seife wie ein Carboxilat mit 4 bis 22 gebundenen C-Atomen. Das feuchte Beschickungsgut kann dabei gelagert und auf mindestens 150°C vorgewärmt werden und bleibt ohne Absetzen frei fliessfähig. Der Autor führt aus, dass es vor seiner Erfindung bei feuchtem Beschickungsgut nicht möglich war, damit einen Vorwärmer zu beschicken, weil bei Temperaturen von 100°C und darüber ein Verbacken der Masse unvermeidlich war. Die Schrift schweigt sich über die Patikelgrösse aus, jedoch wird unter Hinweis auf die EP 11 23 903 A2 ausgeführt, dass ohne eine dort beschriebene Vorrichtung mit einem elektrostatischen Staubabscheider Feinstaub-Partikel zu einer Umweltverschmutzung führten.

Durch die DE 10 2008 030 161 B3 ist ein schachtförmiger Wärmetauscher für die Vorwärmung von partikelförmigem Glasgemenge für Glasschmelzöfen bekannt, durch den Rauchgase aus der Ofenbeheizung in alternierenden und mäandrierenden waagrechten Rauchgaskanälen geleitet werden. Der Wärmetauscher besitzt zahlreiche senkrechte und im Querschnitt rechteckige Schmelzgutkanäle, die sich querverschoben mit den Rauchgaskanälen kreuzen und durch öffnungen in den Kanalwänden derart miteinander verbunden sind, dass Wasserdampf aus den senkrechten Schmelzgutkanälen in Querrichtung abgesaugt und der Eintritt von Rauchgasen in die Schmelzgutkanäle verhindert werden soll. Dabei ist jedoch nicht auszuschliessen, dass durch die Abstände der besagten öffnungen in den Schachtwänden und durch die langen horizontalen Strömungswege innerhalb des Schmelzguts darin Feuchtigkeit zurückbleibt, die zu einem Verkleben der Partikel des Schmelzgutes und zu einer Blockierung das Nachschubs führt.

Keines der vorgenannten Dokumente befasst sich mit dem Problem, das Beschickungsgut gleichmässig und in möglichst dünner Lage auf bzw. über den obersten Heizgaskanälen zu verteilen und diesen Zustand aufrecht zu erhalten.

Durch die DE 32 17 414 C1 ist ein Plattenwärmeaustauscher für die Vorwärmung von Glasscherben bekannt. Für eine gleichmässige Beschickung des Plattenwärmeaustauschers mit Glasscherben ist eine hin- und herlaufende oder rotierende Zuführeinrichtung, z.B. ein Drehrohrverteiler vorgesehen.

Der Erfindung liegt die Aufgabe zugrunde, ein Verfahren der eingangs beschriebenen Gattung anzugeben, mit dem die Aufgabe gelöst wird, das Beschickungsgut in äusserst dünner, aber gleichmässiger Schichtdicke auf und zwischen den oberen Heizelementen zu verteilen, so dass ein Verkleben von Partikeln und ein Stau des Beschickungsguts wirksam unterdrückt bzw. vermieden wird.

Die Lösung der gestellten Aufgabe erfolgt bei dem eingangs angegebenen Verfahren erfindungsgemäss dadurch dass
a) über den obersten Heizelementen eine Verteilereinrichtung mit mindestens drei schwenkbaren Verteilerplatten angeordnet ist, deren Schwenkachsen in den waagrechten Kanten eines virtuellen Prismas (P) verlaufen, wobei
b) die oberste Verteilerplatte das Beschickungsgut alternierend auf eine der darunter angeordneten Verteilerplatten abwirft, die ihrerseits das aufgefangene Beschickungsgut nach einer ihrer Seiten nach unten abwirft, und wobei
c) die Bewegungen der Verteilerplatten von Sensoren mit einer Auswerte- und Steuerschaltung und den Verteilerplatten zugeordneten Stellgliedern im Sinne einer gleichmässigen Flächenverteilung des Beschickungsguts über den Querschnitt des Vorwärmers gesteuert werden.

Dadurch wird die gestellte Aufgabe in vollem Umfange gelöst, nämlich das Beschickungsgut in äusserst dünner, aber gleichmässiger Schichtdicke auf und zwischen den oberen Heizelementen verteilt, so dass ein Verkleben von Partikeln und ein Stau des Beschickungsguts wirksam unterdrückt bzw. vermieden wird.

Die Erfindung betrifft auch eine Vorrichtung zum Beschicken von Vorwärmern mit einer Verteilereinrichtung und mit Heizelementen für das Beschickungsgut von Glas-Schmelzanlagen, wobei das Beschickungsgut durch Sensoren gesteuert in gleichförmiger Verteilung auf die obersten Heizelemente aufgebracht wird.

Zur Lösung der gleichen Aufgabe und Erzielung der gleichen Vorteile ist eine solche Vorrichtung dadurch gekennzeichnet, dass
a) über den obersten Heizelementen eine Verteilereinrichtung mit mindestens drei schwenkbaren Verteilerplatten angeordnet ist, deren Schwenkachsen in den waagrechten Kanten eines vituellen Prismas (P) verlaufen, wobei
b) die oberste Verteilerplatte alternierend zwischen zwei Endstellungen verschwenkbar ist, in denen das Beschickungsgut auf eine der darunter angeordneten Verteilerplatten abwerfbar ist, durch die das jeweils aufgefangene Beschickungsgut nach einer ihrer Seiten nach unten abwerfbar ist, und wobei
c) die Bewegungen der Verteilerplatten von Sensoren mit einer Auswerte- und Steuerschaltung und den Verteilerplatten zugeordneten Stellgliedern im Sinne einer gleichmässigen Flächenverteilung des Beschickungsguts über den Querschnitt des Vorwärmers steuerbar sind.

Es ist im Zuge weiterer Ausgestaltungen der Erfindung besonders vorteilhaft, wenn - entweder einzeln oder in Kombination - :
* die oberste Achse in der vertikalen Mittenebene (M-M) der Verteilereinrichtung angeordnet ist und wenn darunter zwei weitere Achsen mit ihren Verteilerplatten in spiegelsymmetrischer Anordnung beiderseits der vertikalen Mittenebene (M-M) der Verteilereinrichtung angeordnet sind,
* der Gleitweg zweier in Fluchtstellung zueinander ausgerichteter Verteilerplatten durch jeweils ein Ablenkblech begrenzt ist, das sich im Randbereich der Verteilereinrichtung befindet,
* die Sensoren in einer waagrechten Matrixanordnung angeordnet sind, die sich in einer waagrechten Ebene am oberen Ende des Vorwärmers befindet,
* die Sensoren in Zwischenräume zwischen den obersten Heizelementen hineinragen, und/oder, wenn
* die Verteilereinrichtung in spiegelsymmetrischer Anordnung zwei schrägstehende Wände aufweist, deren virtuelle Verlängerungen sich in der Mittenebene (M-M) schneiden.

### Detailbeschreibung:

Ein Ausführungsbeispiel des Erfindungsgegenstandes und dessen Wirkungsweisen und weitere Vorteile werden nachfolgend anhand der Figuren 1 bis 5 näher erläutert.

Es zeigen:
- Figur 1: einen Vertikalschnitt durch das obere Ende eines Vorwärmers und durch eine Verteilereinrichtung für das Beschickungsgut in Verbindung mit den Mess- und Steuereinrichtungen,
- Figur 2: einen Schnitt analog Figur 1 zur Demonstration der Bewegungen der Verteilerplatten,
- Figur 3: eine Seitenansicht des Gegenstandes von Figur 2 unter Weglassung der vorderen Dachfläche,
- Figur 4: eine Darstellung analog Figur 2 bei einer Beschickungsrichtung in der Nähe des linken Randes und
- Figur 5: eine Darstellung analog Figur 2 bei einer Beschickungsrichtung in der Mitte der Vorrichtung.

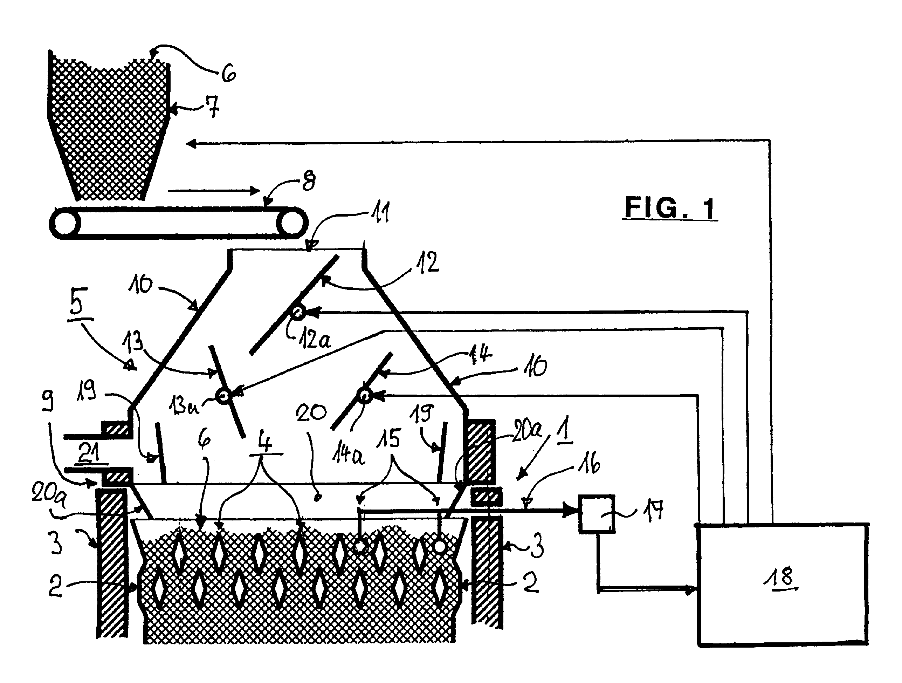

In Figur 1 ist ein Vertikalschnitt durch das obere Ende eines Vorwärmers 1 mit Führungswänden 2, einer Wärmedämmung 3 und zwei Etagen von Heizelementen 4 dargestellt, über denen eine Verteilereinrichtung 5 für das Beschickungsgut 6 angeordnet ist, die von oben aus einem Silo 7 über ein Transportband 8 mit breiter Flächenverteilung versorgt wird. Der Vorwärmer 1 und die Verteilereinrichtung 5 berühren sich mit rechteckigen Querschnitten an einer Trennfuge 9. Die Verteilereinrichtung 5 besitzt zwei schräge Dachflächen 10. die an ihren oberen Enden eine rechteckige Beschickungsöffnung 11 zwischen sich einschliessen.

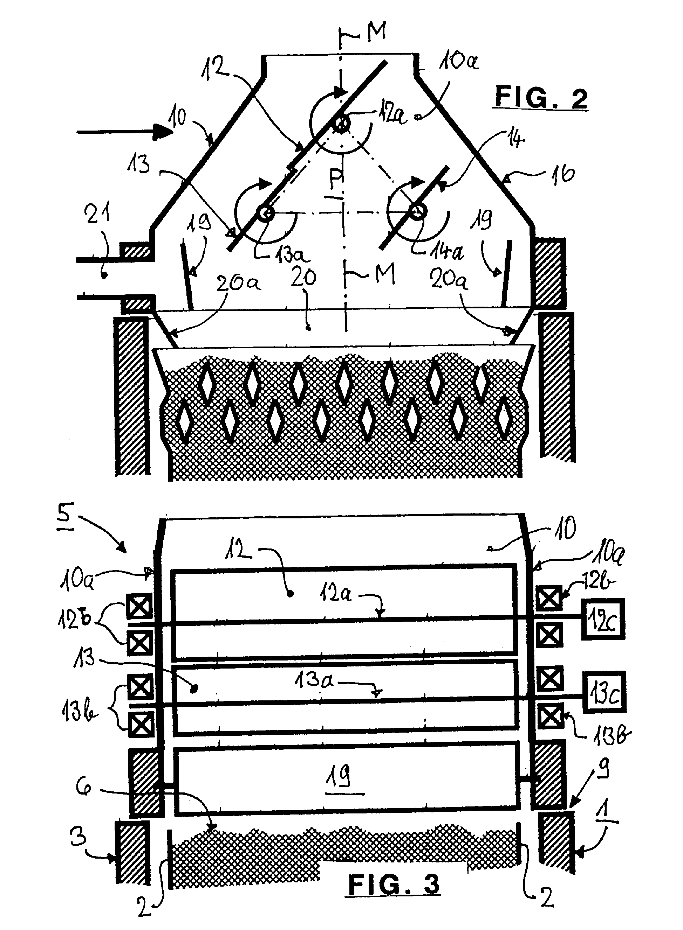

Innerhalb der Verteilereinrichtung 5 sind drei schwenkbare Verteilerplatten 12, 13 und 14 angeordnet, deren Achsen 12a, 13a und 14a an den waagrechten Kanten eines virtuellen Prismas P verlaufen (Figur 2). Innerhalb des Beschickungsguts 6 und zwischen den Heizelementen 4 befindet sich eine flächige Matrix von Sensoren 15, von denen hier nur zwei dargestellt sind. Deren Signale werden über einzelne Leitungen 16 einer Sammelstelle 17 zugeführt und von hier aus zu einer Regeleinrichtung 18 für die räumliche Einstellung der Verteilerplatten 12, 13 und 14. Innerhalb der Verteilereinrichtung 5 befinden sich noch zwei Ablenkbleche 19, die verhindern sollen, dass Beschickungsgut 6 in den Zwischenraum zwischen die Führungswände 2 und die Wärmedämmung 3 eindringt. Nach unten abschliessend ist im Bereich der Trennfuge 9 ein rechteckiger Rahmen 20 aus Schrägflächen 20a angeordnet, der den gleich Zweck verfolgt. Die aus dem Beschickungsgut 6 aufströmenden Abgase werden durch eine Austrittsleitung 21 abgeführt.

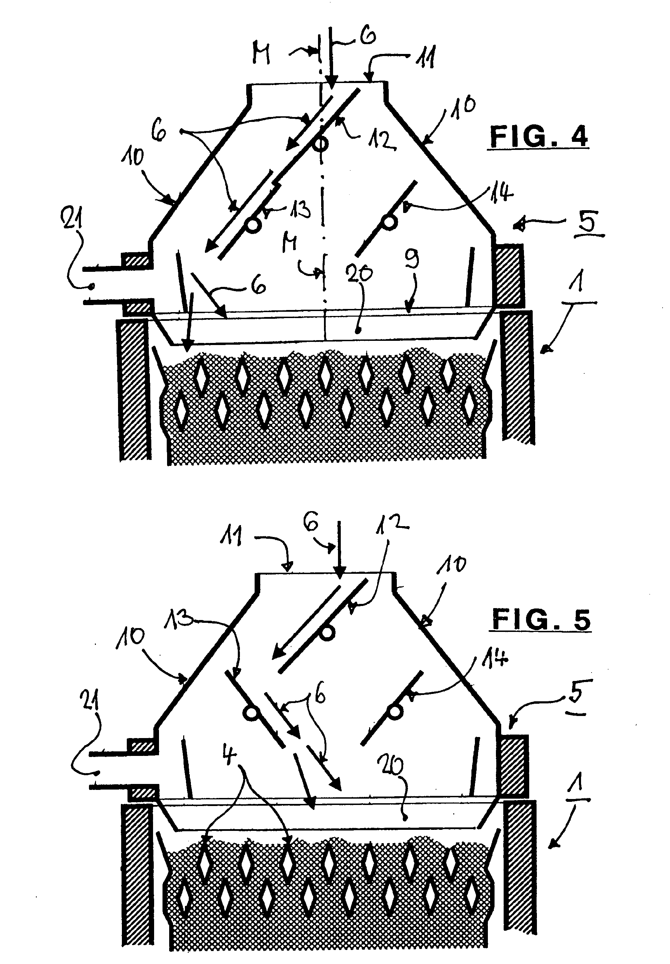

In Figur 2 ist das virtuelle Prisma P angedeutet, an dessen waagrechten Kanten sich die Achsen 12a, 13a und 14a der Verteilerplatten 12, 13 und 14 befinden. Deren Schwenkbewegungen sind durch kreisförmige Pfeile angedeutet. In diesem Falle überlappen sich zwei Längskanten der Verteilerplatten 12 und 13. Die Wirkung ist anhand der Figur 4 dargestellt.

Die Figur 3 zeigt eine Seitenansicht des Gegenstandes von Figur 2 in Pfeilrichtung unter Weglassung der vorderen Dachfläche 10. Diese Dachflächen sind an beiden Enden durch Stirnflächen 10a verbunden, an denen Lager 12b und 13b für die Schwenkachsen 12a und 13a befestigt sind. Deren Antrieb erfolgt durch Stellglieder 12c und 13c, die durch die Regeleinrichtung 18 (Figur 1) angesteuert werden. Analoges gilt natürlich auch für die Schwenkachse 14a.

Der obere Teil von Figur 4 zeigt eine Darstellung analog Figur 2 bei einer Beschickungsrichtung in der Nähe des linken Randes des Vorwärmers 1, und Figur 5 zeigt eine Darstellung analog Figur 2 bei einer Beschickungsrichtung in der Mitte des Vorwärmers 1. Bei spiegelsymmetrischer Betrachtung zur Mittenebene M-M der Figur 4 ergibt sich eine Beschickungsrichtung in der Nähe des rechten Randes des Vorwärmers 1.

Der Erfindungsgegenstand schafft durch die Kaskadenanordnung eine hervorragende Voraussetzung dafür, dass das Beschickungsgut 6 in äusserst dünner, aber gleichmässiger Schichtdicke auf und zwischen den oberen Heizelementen 4 verteilt wird, so dass ein Verkleben von Partikeln und ein Stau des Beschickungsguts 6 wirksam unterdrückt bzw. vermieden wird.

### Bezugszeichenliste:

- 1: Vorwärmers
- 2: Führungswände
- 3: Wärmedämmung
- 4: Heizelemente
- 5: Verteilereinrichtung
- 6: Beschickungsgut
- 7: Silo
- 8: Transportband
- 9: Trennfuge
- 10: Dachflächen
- 10a: Stirnflächen
- 11: Beschickungsöffnung
- 12: Verteilerplatte
- 12a: Schwenkachse
- 12b: Lager
- 12c: Stellglied
- 13: Verteilerplatte
- 13a: Schwenkachse
- 13b: Lager
- 13c: Stellglied
- 14: Verteilerplatte
- 14a: Schwenkachse
- 15: Sensoren
- 16: Leitungen
- 17: Sammelstelle
- 18: Regeleinrichtung
- 19: Ablenkbleche
- 20: Rahmen
- 20a: Schrägflächen
- 21: Austrittsleitung

- M-M: Mittenebene
- P: Prisma

## Patentansprüche

1. Verfahren zum Beschicken von Vorwärmern (1) mit Heizelementen (4) für das Beschickungsgut (6) von Glas-Schmelzanlagen, wobei das Beschickungsgut (6) durch Sensoren (15) gesteuert in gleichförmiger Verteilung auf die obersten Heizelemente (4) aufgebracht wird, **dadurch gekennzeichnet, dass**
a) über den obersten Heizelementen (4) eine Verteilereinrichtung (5) mit mindestens drei schwenkbaren Verteilerplatten (12, 13, 14) angeordnet ist, deren Schwenkachsen (12a, 13a, 14a) in den waagrechten Kanten eines virtuellen Prismas (P) verlaufen, wobei
b) die oberste Verteilerplatte (12) das Beschickungsgut (6) alternierend auf eine der darunter angeordneten Verteilerplatten (13, 14) abwirft, die ihrerseits das aufgefangene Beschickungsgut (6) nach einer ihrer Seiten nach unten abwirft, und wobei
c) die Bewegungen der Verteilerplatten (12 , 13, 14) von Sensoren (15) mit einer Auswerte- und Steuerschaltung (17/18) und den Verteilerplatten (12, 13, 14) zugeordneten Stellgliedern (12c, 13c) im Sinne einer gleichmässigen Flächenverteilung des Beschickungsguts (6) über den Querschnitt des Vorwärmers (1) gesteuert werden.

2. Vorrichtung zum Beschicken von Vorwärmern (1) mit einer Verteilereinrichtung (5) und mit Heizelementen (4) für das Beschickungsgut (6) von Glas-Schmelzanlagen, wobei das Beschickungsgut (6) durch Sensoren (15) gesteuert in gleichförmiger Verteilung auf die obersten Heizelemente (4) aufbringbar ist,
**dadurch gekennzeichnet, dass**
a) über den obersten Heizelementen (4) eine Verteilereinrichtung (5) mit mindestens drei schwenkbaren Verteilerplatten (12, 13, 14) angeordnet ist, deren Schwenkachsen (12a, 13a, 14a) in den waagrechten Kanten eines vituellen Prismas (P) verlaufen, wobei
b) die oberste Verteilerplatte (12) alternierend zwischen zwei Endstellungen verschwenkbar ist, in denen das Beschickungsgut (6) auf eine der darunter angeordneten Verteilerplatten (13, 14) abwerfbar ist, durch die das jeweils aufgefangene Beschickungsgut (6) nach einer ihrer Seiten nach unten abwerfbar ist, und wobei
c) die Bewegungen der Verteilerplatten (12, 13, 14) von Sensoren (15) mit einer Auswerte- und Steuerschaltung (17/18) und den Verteilerplatten (12, 13, 14) zugeordneten Stellgliedern (12c, 13c) im Sinne einer gleichmässigen Flächenverteilung des Beschickungsguts (6) über den Querschnitt des Vorwärmers (1) steuerbar sind.

3. Vorrichtung nach Anspruch 2, **dadurch gekennzeichnet, dass** die oberste Achse (12a) in der vertikalen Mittenebene (M-M) der Verteilereinrichtung (5) angeordnet ist und dass darunter zwei weitere Achsen (13a, 14a) mit ihren Verteilerplatten (13, 14) in spiegelsymmetrischer Anordnung beiderseits der vertikalen Mittenebene (M-M) der Verteilereinrichtung (5) angeordnet sind.

4. Vorrichtung nach Anspruch 3, **dadurch gekennzeichnet, dass** der Gleitweg zweier in Fluchtstellung zueinander ausgerichteter Verteilerplatten (12, 13, 14) durch jeweils ein Ablenkblech (19) begrenzt ist, das sich im Randbereich der Verteilereinrichtung (5) befindet.

5. Vorrichtung nach Anspruch 2, **dadurch gekennzeichnet, dass** die Sensoren (15) in einer waagrechten Matrixanordnung angeordnet sind, die sich in einer waagrechten Ebene am oberen Ende des Vorwärmers (1) befindet.

6. Vorrichtung nach Anspruch 2, **dadurch gekennzeichnet, dass** die Sensoren (15) in Zwischenräume zwischen den obersten Heizelementen (4) hineinragen.

7. Vorrichtung nach Anspruch 2, **dadurch gekennzeichnet, dass** die Verteilereinrichtung (5) in spiegelsymmetrischer Anordnung zwei schrägstehende Dachflächen (10) aufweist, deren virtuelle Verlängerungen sich in der Mittenebene (M-M) schneiden.

## Claims

1. A method for feeding preheaters (1) having heating elements (4) for the feed material (6) of glass melting installations, the feed material (6) being applied in uniform distribution onto the uppermost heating elements (4), in a manner controlled by sensors, **characterized in that**
a) there is arranged above the uppermost heating elements (4) a distributor device (5) comprising at least three pivotable distributor plates (12, 13, 14), the pivoting axis (12a, 13a, 14a) of which run in the horizontal edges of a virtual prism (P), wherein
b) the uppermost distributor plate (12) throws the feed material (6) alternately onto one of the distributor plates (13, 14) arranged therebelow, which, for its part, throws the caught feed material (6) downwardly toward one of its sides, and wherein
c) the movements of the distributor plates (12, 13, 14) are controlled by sensors (15) having an evaluation and control circuit (17/18) and actuators assigned to the distributor plates (12, 13, 14) so as to achieve a uniform area distribution of the feed material (6) over the cross-section of the preheater (1).

2. A device for feeding preheaters (1) having a distributor device (5) and having heating elements (4) for the feed material (6) of glass melting installations, wherein the feed material (6) can be applied in uniform distribution onto the uppermost heating elements (4), in a manner controlled by sensors (15),
**characterized in that**
a) there is arranged above the uppermost heating elements (4) a distributor device (5) comprising at least three pivotable distributor plates (12, 13, 14), the pivoting axis (12a, 13a, 14a) of which run in the horizontal edges of a virtual prism (P), wherein
b) the uppermost distributor plate (12) can be pivoted alternately between two end positions in which the feed material (6) can be thrown onto one of the distributor plates (13, 14) arranged therebelow, by which the feed material (6) caught in each case can be thrown downwardly toward one of its sides, and wherein
c) the movements of the distributor plates (12, 13, 14) can be controlled by sensors (15) having an evaluation and control circuit (17/18) and actuators assigned to the distributor plates (12, 13, 14) so as to achieve a uniform area distribution of the feed material (6) over the cross-section of the preheater (1).

3. The device according to claim 2, **characterized in that** the uppermost axis (12a) is arranged in the vertical central plane (M-M) of the distributor plane (5), and that arranged therebelow there are two further axes (13a, 14a) with their distributor plates (13, 14) disposed in a mirror-symmetrical arrangement on both sides of the vertical central plane (M-M) of the distributor device (5).

4. The device according to claim 3, **characterized in that** the glide path of two distributor plates (12, 13, 14) aligned with each other in an alignment position is limited in each case by a deflection plate (19) that is located in the edge region of the distributor device (5).

5. The device according to claim 2, **characterized in that** the sensors (15) are arranged in a horizontal matrix arrangement that is located in a horizontal plane at the upper end of the preheater (1).

6. The device according to claim 2, **characterized in that** the sensors (15) protrude into intermediate spaces between the uppermost heating elements (4).

7. The device according to claim 2, **characterized in that** the distributor device (5) has, in mirror-symmetrical arrangement, two angled roof surfaces (10), the virtual extensions of which intersects in the central plane (M-M).

## Revendications

1. Procédé permettant d'alimenter des dispositifs de préchauffage (1) avec des éléments de chauffage (4) pour le matériau d'alimentation (6) d'installation de fusion du verre, pour lequel le matériau d'alimentation (6) piloté par des capteurs est déchargé en distribution uniforme sur les éléments de chauffage (4) les plus hauts **caractérisé en ce que**
a) sur les éléments de chauffage (4) les plus hauts est disposé un système distributeur (5) avec au moins trois plaques distributrices (12, 13, 14) pivotables dont les axes de pivotement (12a, 13a, 14a) passent dans les bords horizontaux d'un prise (P) virtuel, pour lequel
b) la plaque distributrice (12) la plus haute décharge le matériau d'alimentation (6) de façon alternée sur une des plaques distributrices (13, 14) disposées en dessous qui de son côté décharge vers le bas le matériau d'alimentation (6) vers un de ses côtés et pour lequel
c) les mouvements des plaques distributrices (12, 13, 14) et les actionneurs (12c, 13c) attribués aux plaques distributrices (12, 13, 14) sont pilotés par des capteurs (15) avec un circuit d'exploitation et de pilotage (17/18) au sens d'une distribution de surface uniforme du matériau d'alimentation (6) sur la section du dispositif de préchauffage (1).

2. Dispositif permettant d'alimenter des dispositifs de préchauffage (1)avec un système de distribution (5) et avec des éléments de chauffage (4) pour le matériau d'alimentation (6) d'installation de fusion du verre pour lequel le matériau d'alimentation (6) piloté par des capteurs (15) peut être appliqué en répartition uniforme sur les éléments de chauffage (4) les plus hauts **caractérisé en ce que**
a) sur les éléments de chauffage (4) les plus hauts est disposé un système distributeur (5) avec au moins trois plaques distributrices (12, 13, 14) pivotables dont les axes de pivotement (12a, 13a, 14a) passent dans les bords horizontaux d'un prisme (P) virtuel, pour lequel
b) la plaque distributrice (12) la plus haute peut être pivotée de façon alternée entre deux positions finales dans lesquelles le matériau d'alimentation (6) peut être déchargé sur une des plaques distributrices (13, 14) disposées en dessous par lesquelles le matériau d'alimentation (6) à chaque fois recueilli peut être déchargé vers le dessous vers un de ses côtés, et pour lequel
c) les mouvements des plaques distributrices (12, 13, 14) et les actionneurs (12c, 13c) attribués aux plaques distributrices (12, 13, 14) peuvent être pilotés par des capteurs (15) avec un circuit d'exploitation et de pilotage (17/18) au sens d'une distribution de surface uniforme du matériau d'alimentation (6) sur la section du dispositif de préchauffage (1).

3. Dispositif selon la revendication 2 **caractérisé en ce que** l'axe le plus haut (12a) est disposé dans le plan médian vertical (M-M) du système distributeur (5) et **en ce qu'**en dessous deux autres axes (12a, 14a) sont disposés avec leurs plaques distributrices (13, 14) dans un arrangement de symétrie spéculaire des deux côtés du plan médian vertical (M-M) du système distributeur (5).

4. Dispositif selon revendication 3 **caractérisé en ce que** la trajectoire de glissement de deux plaques distributrices (12, 13, 14) orientées en position d'alignement l'une par rapport à l'autre est limitée par à chaque fois une tôle déflectrice (19) qui se trouve dans une zone de bord du système distributeur (5).

5. Dispositif selon la revendication 2 **caractérisé en ce que** les capteurs (15) sont disposés dans un arrangement de matrice horizontal qui se trouve dans un plan horizontal à l'extrémité supérieure du dispositif de préchauffage.

6. Dispositif selon la revendication 2 **caractérisé en ce que** les capteurs (15) avancent dans les espaces intermédiaires entre les éléments de chauffage (4) les plus élevés.

7. Dispositif selon la revendication 2 **caractérisé en ce que** le système distributeur (5) présente dans un arrangement de symétrie spéculaire deux surfaces de toit (10) inclinées dont les prolongements virtuels se coupent dans le plan médian (M-M).
